# EUROPÄISCHE PATENTSCHRIFT

(11) **EP 0 623 534 B1**
(45) Veröffentlichungstag und Bekanntmachung des Hinweises auf die Patenterteilung: **27.08.1997**
(21) Anmeldenummer: 94106453.7
(22) Anmeldetag: 26.04.1994
(51) Int. Cl.: B65G 47/252, B65G 47/22

(54) **Vorrichtung zum Ändern der Stellung eines Deckels**
Device for changing the attitude of a lid
Dispositif pour changer la position d'un couvercle

(30) Priorität: 07.05.1993 DE 4315314
(43) Veröffentlichungstag der Anmeldung: 09.11.1994
(73) Patentinhaber: Krupp Kunststofftechnik GmbH, 45143 Essen (DE)
(72) Erfinder: Sommer, Walter, D-45145 Essen (DE)

(56) Entgegenhaltungen:
- DE-A- 4 028 613
- GB-A- 2 267 473

## Beschreibung

Die Erfindung betrifft eine Vorrichtung zum Ändern der Stellung eines Behälterdeckels während des Transports aus einer flachen Stellung auf einer Transportvorrichtung mit einer Transport- und Bezugsebene in eine steile Stellung in einer Transportstrecke oder umgekehrt. Die Behälterdeckel können sich im gestanzten (angekippten) oder angerollten Zustand befinden, sie können mit Nocken oder Schraubgewinde versehen sein. Behälterdeckeln als gleichwertig sollen auch zu ihrer Herstellung dienende Ronden angesehen werden. Obwohl Deckel in der Regel kreisrund ausgebildet sind, soll die Vorrichtung auch die Stellung eines nicht kreisrunden Deckels ändern können.

Beim Gummieren, d. h. dem Einbringen von Dichtmasse auf die Innenseite von Deckeln, liegen die Deckel auf ihrer Außenfläche auf flachen Aufnahmen auf, d. h. ihre Innenseite oder -fläche ist nach oben gerichtet. In dieser Lage verlassen sie die Gummiermaschine.

In neueren Trockenöfen werden die Deckel in einem Strang durch die Trockenstrecke transportiert, wobei sich die einlaufenden Deckel in aufgestellter, paralleler Position befinden, d. h. die Hauptebene des Deckels ist senkrecht zur Transportstrecke ausgerichtet und somit um 90° gegenüber der liegenden Stellung gedreht. Das Überführen der Deckel von der flachen Stellung auf einer Transportebene in die senkrecht dazu ausgerichtete Stellung in der Transportstrecke wird als Aufstellen bezeichnet.

Alle bisher bekannten Vorrichtungen zum Aufstellen von Dosendeckeln stoppen den liegend transportierten Deckel mehr oder weniger hart durch einen Anschlag und zwingen ihn entweder durch Magneträder, Borstenräder oder den freien Fall, ggf. durch Magnetkraft, Druckluft oder Vakuum unterstützt, in eine vertikale Richtung. Dabei besteht bei frisch gummierten Deckeln die erhebliche Gefahr, daß sich die Gummi- oder Dichtmasse infolge ihrer Viskosität und des plötzlichen Stoppens und Umlenkens im Deckel verschiebt oder sogar aus diesem austritt.

Der vorliegenden Erfindung liegt die Aufgabe zugrunde, eine Vorrichtung zu schaffen, mit der Behälterdeckel auch bei hohen Durchsatzleistungen (Deckel/Zeiteinheit) stoß- und ruckfrei von einer liegenden in eine steile oder stehende Stellung - und umgekehrt - überführt werden können.

Diese Aufgabe wird erfindungsgemäß dadurch gelöst, daß die Vorrichtung zwei Transportschnecken aufweist, die gegensinnig antreibbar und mit gegensinniger Steigungsrichtung versehen sind, daß die Achsen der Transportschnecken in Höhe der Transportebene angeordnet sind, daß die umlaufenden Ausnehmungen der Transportschnecken an dem der Transportebene benachbarten Ende - senkrecht zur Transportebene gesehen - eine Kontur aufweisen, die mindestens der Umfangsform des Deckels entspricht, daß die Gangweite der umlaufenden Ausnehmungen der Transportschnecken von dem der Transporteinrichtung benachbarten Ende zu dem der Transportstrecke benachbarten Ende hin abnimmt und daß zwischen den Transportschnecken eine Abstützfläche für die Deckel angeordnet ist, die an dem der Transporteinrichtung benachbarten Ende die gleiche Höhe wie die Transportebene und an dem der Transportstrecke benachbarten Ende eine um den halben Deckeldurchmesser niedrigere Höhe aufweist.

Zum Aufstellen erfassen die beiden Transportschnecken die Deckel von der Transporteinrichtung in der Transportebene, in der die Deckel flach aufliegen, und führen sie zur Transportstrecke. Dabei erfolgt die Mitnahme der Deckel in Transportrichtung und die Änderung ihrer Schrägstellung durch die geometrischen Abmessungen und die Form der Schnecken. Nach unten stützen sich die Deckel zusätzlich auf einer Stützfläche ab.

Beim Überführen von der flachen in die steile Lage werden die Deckel von einer zu den Schnecken fördernden Transporteinrichtung, auf der sie mit definiertem Abstand liegen, dadurch übernommen, daß sie von den umlaufenden Ausnehmungen (Gängen) der Schnecken erfaßt werden. Hierzu ist vorgesehen, die Achsen der Transportschnecken zumindest an dem der Transporteinrichtung benachbarten Ende im wesentlichen in gleicher Höhe wie die Transportebene anzuordnen und die umlaufenden Ausnehmungen an dieser Stelle mit einer solchen Kontur zu versehen, daß diese mindestens der Umfangsform des Deckels entspricht. Durch den gegensinnigen Drehsinn und die gegeninnige Steigungsrichtung der Transportschnecke werden die Deckel von der Transportvorrichtung weg transportiert. Durch die in Richtung der Transportstrecke abnehmende Gangweite werden die Deckel gezwungen, sich aufzustellen, d. h. sich aus der flachen in die steile Lage zu begeben. Da sich die Abstützfläche zwischen den Transportschnecken in gleicher Richtung um den halben Deckeldurchmesser absenkt, kann der Mittelpunkt der Deckel trotz der Winkeländerung in konstanter Höhe gehalten werden.

Wie erwähnt, weisen die Deckel auf der Transporteinrichtung einen konstanten Abstand voneinander auf. Sollen die Deckel in ihrer senkrechten Stellung zu einem sog. Deckelstapel zusammengestellt werden, ist nach einer Weiterbildung der Erfindung vorgesehen, die Steigung der Transportschnecken von dem der Transporteinrichtung benachbarten Ende zu dem der Transportstrecke benachbarten Ende hin abnehmen zu lassen.

Um den Deckeln eine möglichst eindeutige steile Stellung vorzugeben, ist vorgesehen, die Gangweite der umlaufenden Ausnehmungen der Transportschnecken an ihrem der Transportstrecke benachbarten Ende entsprechend der Höhe des Außenrandes des Deckels (bei angerolltem Deckel: der Höhe der Anrollung) zuzüglich einem geringen Spiel zu bemessen.

Um - umgekehrt - insbesondere die längs einer Transportstrecke in einem Stapel antransportierten Deckel zum Flachlegen sicher zu erfassen, ist nach einer Weiterbildung der Erfindung vorgesehen, an dem der Transportstrecke benachbarten Ende der Transportschnecken die Steigung entsprechend der Stapelhöhe eines Deckels zu bemessen.

Ein Ausführungsbeispiel der Erfindung ist in der Zeichnung dargestellt und wird im folgenden näher erläutert. Es zeigen
- Fig. 1: eine erfindungsgemäße Vorrichung in der Draufsicht und
- Fig. 2: die Vorrichtung in einem Längsschnitt längs der Linie II-II in Fig. 1.

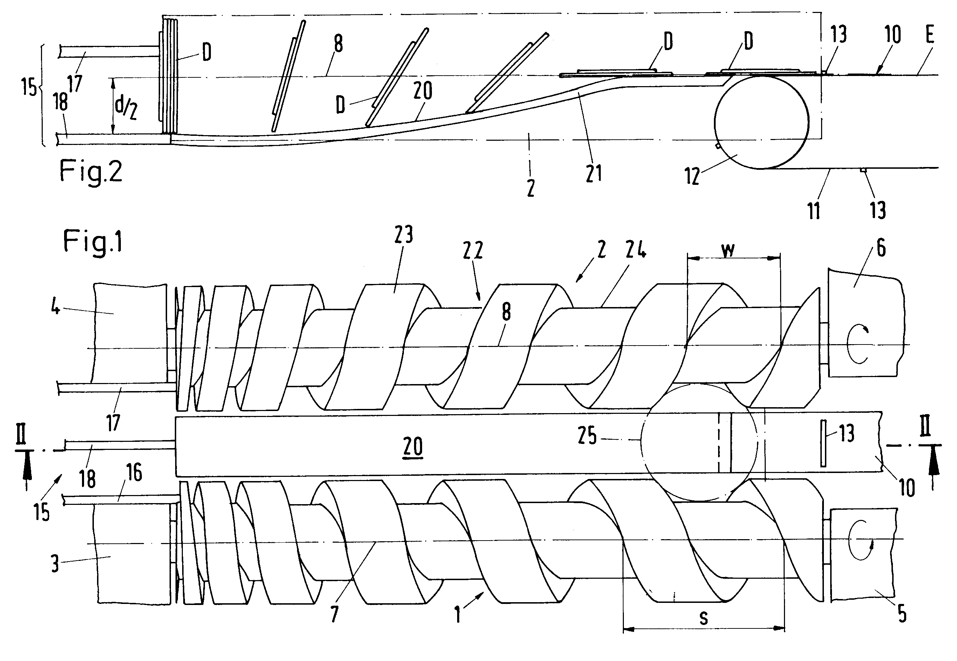

Die Vorrichtung zum Ändern der Stellung eines Deckels D gemäß den Fig. 1 und 2 weist zwei Transportschnecken 1, 2 auf, die an ihren Enden in Lagern 3 bis 6 derart gelagert sind, daß ihre Achsen 7, 8 parallel zueinander und in gleicher Höhe angeordnet sind. Die Schnecke 1 weist ein Rechtsgewinde und die Schnecke 2 ein Linksgewinde auf. Beide Schnecken sind durch eine nicht dargestellte Getriebeverbindung gegensinnig antreibbar.

Zwischen den Lagern 5, 6 ist eine Transporteinrichtung 10 mit einem Gurtband 11 angeordnet, das einerseits um eine zwischen den beiden Schnecken 1, 2 angeordnete Umlenkrolle 12 und andererseits um eine (nicht dargestellte) von den Schnecken 1, 2 entfernte Umlenkrolle umläuft. Das Gurtband 11 weist an seiner Außenfläche Mitnehmer 13 auf, die in einem konstanten Abstand, der größer als ein Deckeldurchmesser d ist, voneinander angeordnet sind.

An der der Transporteinrichtung 10 gegenüberliegenden Seite schließt sich eine Transportstrecke 15 in Form eines Führungskorbes an, der beispielsweise aus drei zueinander parallelen Rundstäben 16, 17, 18 besteht. Der Stab 18 befindet sich - in der Draufsicht gemäß Fig. 1 gesehen - mittig zwischen den beiden Schnecken und um d/2, d. h. einen halben Deckeldurchmesser, unterhalb der gemeinsamen Höhe der Achsen 7, 8. Die beiden übrigen Stäbe 16, 17 befinden sich oberhalb der Höhe der Achsen 7, 8 und weisen einen derartigen Abstand voneinander auf, daß sie einen auf dem Stab 18 abgestützten Deckel D mit Spiel umfassen.

Zwischen der Umlenkrolle 12 und dem Führungskorb 15 befindet sich eine Abstützfläche 20, die entweder durch die Oberseite eines dicken, glatten Blechs 21 oder durch die obere Fläche eines massiv ausgebildeten Elements gebildet wird. Während die Abstützfläche 20 an ihrem der Umlenkrolle 12 benachbarten Ende die Höhe der Achsen 7, 8 bzw. die Transportebene E der Transporteinrichtung 10, auf der die Deckel D aufliegen, einnimmt, ist sie demgegenüber an dem dem Führungskorb bzw. der Transportstrecke 15 benachbarten Ende um einen halben Deckeldurchmesser - d/2 - abgesenkt. Zwischen beiden Enden weist die Abstützfläche 20 einen stetigen Übergang auf.

Die Transportschnecken 1, 2 weisen an ihrem der Transporteinrichtung 10 benachbarten Ende eine große Steigung s auf, die sich in Richtung auf die Transportstrecke 15 stetig verringert. Die umlaufende Ausnehmungen 22 zwischen den Stegen bzw. den leistenförmigen Windungen 23 der Schnecken 1, 2 weisen zusammen mit dem Schneckenkern 24 an dem der Transporteinrichtung 10 zugewandten Ende eine solche Kontur auf, daß der durch sie gemeinsam bestimmte geometrische Inkreis 25 in Höhe der Transportebene dem Außendurchmesser d der Deckel D einschließlich einem vorgebbaren Spiel entspricht.

Bei einer Rechtsdrehung der Schnecke 2 und einer Linksdrehung der Schnecke 1 wird ein Deckel D, der sich an der Stelle des gedachten Inkreises 25 befindet, in Richtung auf die Transportstrecke 15 gefördert. Durch abnehmende Steigung s und abnehmende Gangweite w der Schnecken 1, 2 wird der Deckel D auf seinem Weg zur Transportstrecke 15 gezwungen, seine Richtung, wie in Fig. 2 angedeutet, zu ändern und den Abstand zum vorangehenden und nachfolgenden Deckel zu verringern. An dem an der Transportstrecke 15 angrenzenden Ende ist die Steigung s der Schnecken so gering, daß die Deckel D praktisch senkrecht zur Transportrichtung stehen. Durch die Schubkraft der Transportschnecken 1, 2 werden die Deckel zu einem Deckelstapel zusammengedrückt und durch die Transportstrecke 15 z. B. in einen Trockenofen geschoben.

Die Vorrichtung kann auch umgekehrt funktionieren. Im anderen Fall ist der Drehsinn entgegen der Darstellung in Fig. 1, d. h. die Schnecke 2 läuft - von der Transporteinrichtung 10 aus gesehen - links um und die Transportschnecke 1 rechts um. Bei dieser Betriebsweise wird der jeweils erste Deckel D eines in der Transportstrecke 15 befindlichen Deckelstapels von den Schnecken 1, 2 erfaßt, abgezogen und in Richtung auf die Transporteinrichtung 10 gefördert, wobei der Deckel D durch die zunehmende Steigung der Schnecken 1, 2 einen zunehmenden Abstand von dem nächsten Deckel gewinnt und im Zusammenhang mit der ansteigenden Abstützfläche 20 sich zunehmend flacher neigt, bis er schließlich auf der Transportebene E waagerecht zu liegen kommt und von der Transporteinrichtung 10 abtransportiert wird.

## Patentansprüche

1. Vorrichtung zum Ändern der Stellung eines Deckels (D) während des Transports aus einer flachen Stellung auf einer Transportvorrichtung (10) mit einer Transportebene (E) in eine steile Stellung in einer Transportstrecke (15) oder umgekehrt,
**dadurch gekennzeichnet**,
daß die Vorrichtung zwei Transportschnecken (1, 2) aufweist, die gegensinnig antreibbar und mit gegensinniger Steigungsrichtung versehen sind,
daß die Achsen (7, 8) der Transportschnecken (1, 2) in Höhe der Transportebene (E) angeordnet sind,
daß die umlaufenden Ausnehmungen (22) der Transportschnecken (1, 2) - senkrecht zur Transportebene (E) gesehen - an dem der Transporteinrichtung (10) benachbarten Ende eine Kontur aufweisen, die mindestens dem Umfangskreis des Deckels (D) entspricht,
daß die Gangweite (w) der umlaufenden Ausnehmungen (22) der Transportschnecken (1, 2) von dem der Transporteinrichtung (10) benachbarten Ende zu dem der Transportstrecke (15) benachbarten Ende hin abnimmt
und daß zwischen den Transportschnecken (1, 2) eine Abstützfläche (20) für den Deckel (D) angeordnet ist, die an dem der Transporteinrichtung (10) benachbarten Ende die gleiche Höhe wie die Transportebene (E) und an dem der Transportstrecke (15) benachbarten Ende eine um den halben Deckeldurchmesser (d/2) niedrigere Höhe aufweist.

2. Vorrichtung nach Anspruch 1, dadurch gekennzeichnet, daß die Steigung (s) der Transportschnecken (1, 2) von dem der Transporteinrichtung (10) benachbarten Ende zu dem der Transportstrecke (15) benachbarten Ende hin abnimmt.

3. Vorrichtung nach Anspruch 1 oder 2, dadurch gekennzeichnet, daß an dem der Transportstrecke (15) benachbarten Ende der Transportschnecken (1, 2) die Gangweite (w) der umlaufenden Ausnehmungen (22) im wesentlichen der Höhe des Außenrandes des Deckels entspricht.

4. Vorrichtung nach Anspruch 2 oder 3, dadurch gekennzeichnet, daß an dem der Transportstrecke (15) benachbarten Ende der Transportschnecken (1, 2) deren Steigung (s) im wesentlichen der Stapelhöhe eines Deckels (D) entspricht.

## Claims

1. Device for changing the position of a lid (D) during transport from a flat position on a transport device (10) with a transport plane (E) into a steeply inclined position in a transport section (15), or vice versa, characterised in that the device has two transport worms (1, 2), which may be driven in contrary directions and are equipped with pitches in contrary directions;
that the axes (7, 8) of the transport worms (1, 2) are disposed at the height of the transport plane (E);
that at the end adjacent to the transport means (10) - viewed perpendicular to the transport plane (E) - the circumferential recesses (22) of the transport worms (1, 2) have a contour corresponding at least to the peripheral circle of the lid (D);
that the lead width (w) of the circumferential recesses (22) of the transport worms (1, 2) decreases from the end adjacent to the transport means (10) towards the end adjacent to the transport section (15);
and that a support surface (20) for the lid (D) is arranged between the transport worms (1, 2), said support surface having the same height at the end adjacent to the transport means (10) as the transport plane (E) and having a height which is lower by half the lid diameter (d/2) at the end adjacent to the transport section (15).

2. Device according to Claim 1, characterised in that the pitch (s) of the transport worms (1, 2) decreases from the end adjacent to the transport means (10) towards the end adjacent to the transport section (15).

3. Device according to Claim 1 or 2, characterised in that at the end adjacent to the transport section (15), the lead width (w) of the circumferential recesses (22) of the transport worms (1, 2) substantially corresponds to the height of the outer edge of the lid.

4. Device according to Claim 2 or 3, characterised in that at the end of the transport worms (1, 2) adjacent to the transport section (15), the pitch (s) of said transport worms substantially corresponds to the stack height of a lid (D).

## Revendications

1. Dispositif pour modifier la position d'un couvercle (D) pendant le transport, depuis une position couchée sur un dispositif de transport (10) avec un plan de transport (E) en une position debout à l'intérieur d'une voie de transport (15) ou vice versa, **caractérisé en ce** que ledit dispositif possède deux vis de transport (1, 2) pouvant être entraînées en sens opposé et présentant un sens de pas opposé, que les axes (7, 8) des vis de transport (1, 2) se trouvent au niveau du plan de transport (E), que les évidements tournants (22) des vis de transport (1, 2) - vu perpendiculairement par rapport au plan de transport (E) - présentent au bout voisin du dispositif de transport (10) un contour correspondant au moins au pourtour du couvercle (D), que la largeur de pas (w) des évidements tournants (22) des vis de transport (1, 2) décroît depuis le bout voisin du dispositif de transport (10) vers le bout voisin de la voie de transport (15), et qu'il y a entre les vis de transport (1, 2) une surface d'appui (20) pour le couvercle (D) qui présente, au bout voisin du dispositif de transport (10), la même hauteur que le plan de transport (E) et, au bout voisin de la voie de transport (15), une hauteur inférieure du demi-diamètre de couvercle (d/2).

2. Dispositif suivant revendication 1, caractérisé en ce que le pas (s) des vis de transport (1, 2) décroit depuis le bout voisin du dispositif de transport (10) vers le bout voisin de la voie de transport (15).

3. Dispositif suivant revendication1 ou 2, caractérisé en ce qu'au bout voisin de la voie de transport (15) des vis de transport (1, 2), la largeur de pas (w) des évidements tournants (22) correspond essentiellement à la hauteur du bord extérieur du couvercle.

4. Dispositif suivant revendication 2 ou 3, caractérisé en ce qu'au bout voisin de la voie de transport (15) des vis de transport (1, 2), le pas (s) de celles-ci correspond essentiellement à la hauteur d'empilage d'un couvercle (D).
